# FASCICULE DE BREVET EUROPEEN

(11) **EP 1 680 580 B1**
(45) Date de publication et mention de la délivrance du brevet: **07.03.2007**
(21) Numéro de dépôt: 04791469.2
(22) Date de dépôt: 05.10.2004
(51) Int. Cl.: F01N 3/08, F01N 3/023

(54) **SYSTEME D AIDE A LA REGENERATION DE MOYENS DE DEPOLLUTION IN TEGRES DANS UNE LIGNE D ECHAPPEMENT D UN MOTEUR DIESEL DE VEHICULE**
SYSTEM ZUR UNTERSTÜTZUNG DER REGENERATION VON IN EINER ABGASLEITUNG EINES DIESELMOTORFAHRZEUGS INTEGRIERTEN ENTGIFTUNGSMITTELN
SYSTEM FOR AIDING THE REGENERATION OF DEPOLLUTION MEANS INTEGRATED INTO AN EXHAUST LINE OF A DIESEL MOTOR VEHICLE

(30) Priorité: 07.11.2003 FR 0313158
(43) Date de publication de la demande: 19.07.2006
(73) Titulaire: Peugeot Citroen Automobiles SA, 78140 Vélizy-Villacoublay (FR)
(72) Inventeur: COLIGNON, Christophe, F-92300 LEVALLOIS PERRET (FR)
(74) Mandataire: Habasque, Etienne J. Jean-François
(86) Numéro de dépôt international: PCT/FR2004/002514
(87) Numéro de publication internationale: WO 2005/049985

(56) Documents cités:
- EP-A- 1 234 959
- DE-A- 19 963 930
- FR-A- 2 805 568
- FR-A- 2 831 923
- PATENT ABSTRACTS OF JAPAN vol. 2002, no. 12, 12 décembre 2002 (2002-12-12) & JP 2002 235590 A (NISSAN MOTOR CO LTD), 23 août 2002 (2002-08-23)

## Description

La présente invention concerne un système d'aide à la régénération de moyens de dépollution associés à des moyens formant catalyseur d'oxydation, et intégrés dans une ligne d'échappement d'un moteur Diesel de véhicule automobile.

Plus particulièrement, l'invention se rapporte à un système dans lequel le moteur est associé à des moyens à rampe commune d'alimentation en carburant de cylindres du moteur, adaptés pour mettre en oeuvre, à iso-couple, une stratégie de régénération par injection de carburant dans les cylindres, selon au moins une post-injection.

Différents systèmes d'aide à la régénération périodique des moyens de dépollution ont déja été développés dans l'état de la technique. Ainsi par exemple, le document PR 2 805 568 propose un système adapté pour déclencher la combustion des particules piégées dans un filtre en enclenchant une phase d'injections multiples de carburant dans les cylindres du moteur au cours de la phase de détente après l'injection principale.

Lors de la régénération de moyens de dépollution tels que par exemple un filtre à particules, les phases de lever de pied de l'accélérateur du véhicule (pas d'injection de carburant en fonctionnement normal), et de ralenti du moteur (température d'échappement très faible), sont problématiques car elles font chuter la température d'échappement, c'est-à-dire de la ligne et des éléments intégrés dans celle-ci.

L'utilisation d'une ou de plusieurs post-injections lors de ces phases de vie du moteur permet de limiter la chute de température de la ligne d'échappement, en se basant sur la conversion catalytique des HC produits par la combustion de la ou des post-injections dans le moteur.

Cependant, ces stratégies reposent sur l'exotherme produit par les moyens formant catalyseur, ces moyens, comprenant par exemple un catalyseur d'oxydation ou un piège à NOx avec une fonction d'oxydation CO/HC, étant considérés comme activés.

Lors des phases de retour au ralenti du moteur, consécutivement à un lever de pied de l'accélérateur, il n'y a pas d'injection principale ni d'injection pilote et la ou chaque post-injection ne brûle donc pas dans le cylindre, car elle ne fait que vaporiser le carburant sous forme d'HC qui sont convertis par les moyens formant catalyseur.

La température en entrée des moyens formant catalyseur d'oxydation est donc très faible et malgré l'exotherme catalytique produit par la combustion des HC issus de la ou de chaque post-injection, la face avant des moyens formant catalyseur refroidit progressivement et son activité de conversion se désamorce progressivement.

Lors des phases de ralenti du moteur, malgré l'utilisation d'une ou plusieurs post-injections, la température en entrée des moyens formant catalyseur est relativement faible. La stratégie de post-injection au ralenti repose également sur la conversion catalytique des HC produits par la combustion de la ou des post-injections dans le moteur. Malgré cet exotherme catalytique, la face avant des moyens formant catalyseur refroidit progressivement et son activité de conversion se désamorce progressivement.

Lors d'une phase de ralenti prolongée, il se peut que les moyens formant catalyseur ne soient donc pas suffisamment actifs pour convertir tous les HC, ce qui se traduit par des pics d'HC en aval de ces moyens formant catalyseur, voire des fumées bleues et/ou des odeurs à l'échappement.

Par ailleurs, l'utilisation de post-injections engendre une dilution de l'huile de lubrification par le carburant, ce qui dégrade les propriétés de lubrification de celle-ci, et notamment une baisse de la viscosité et peut conduire si cette viscosité est trop basse, à une casse du moteur.

Le but de l'invention est donc de résoudre ces problèmes.

A cet effet, l'invention a pour objet un système d'aide à la régénération de moyens de dépollution associés à des moyens formant catalyseur d'oxydation, et intégrés dans une ligne d'échappement d'un moteur Diesel de véhicule automobile et dans lequel le moteur est associé à des moyens à rampe commune d'alimentation en carburant de cylindres du moteur, adaptés pour mettre en oeuvre, à iso-couple, une stratégie de régénération par injection de carburant dans les cylindres selon au moins une post-injection, caractérisé en ce qu'il comporte :
- des moyens de détection d'une requête de régénération et donc de post-injection ;
- des moyens de détection d'une phase de ralenti du moteur de celui-ci;
- des moyens d'acquisition de la température en aval des moyens formant catalyseur ;
- des moyens de détermination d'une durée maximale d'application des post-injections durant la phase de ralenti, à partir de cette température ; et
- des moyens de réduction progressive de la ou de chaque post-injection, lorsque la durée d'utilisation des post-injections a atteint la durée maximale d'application prédéterminée.

Suivant d'autres caractéristiques :
- les moyens de réduction sont adaptés pour réduire la ou chaque post-injection selon une rampe calibrable ;
- les moyens de dépollution comprennent un filtre à particules;
- les moyens de dépollution comprennent un piège à NOx ;
- le carburant comporte un additif destiné à se déposer avec les particules auxquelles il est mélangé, sur les moyens de dépollution pour faciliter leur régénération ;
- le carburant comporte un additif formant piège à NOx; et
- le moteur est associé à un turbocompresseur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système d'aide à la régénération selon l'invention ; et
- la Fig.2 représente un organigramme illustrant le fonctionnement de celui-ci.

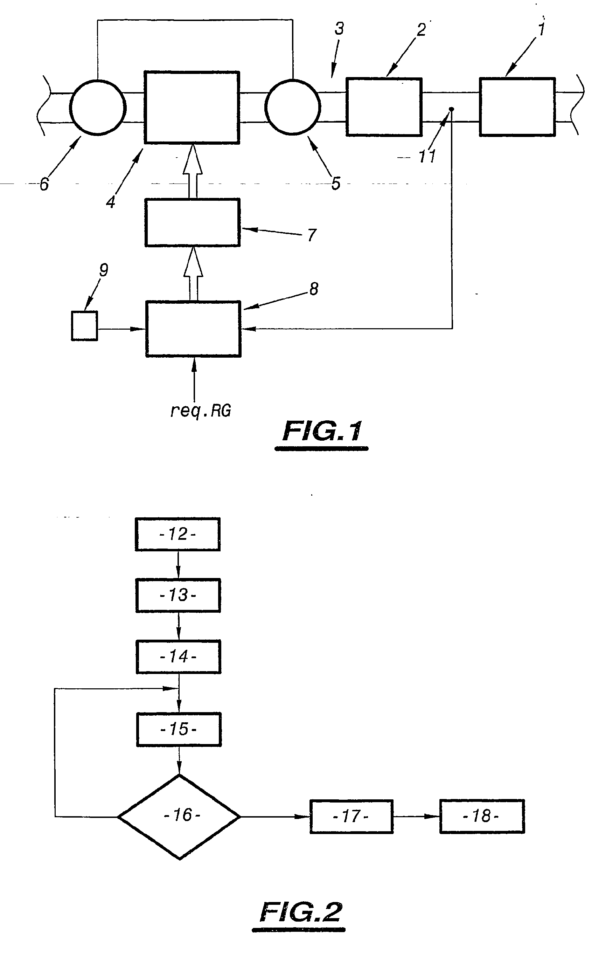

On a en effet illustré sur la figure 1, la structure générale d'un système d'aide à la régénération de moyens de dépollution, désignés par la référence générale 1 sur cette figure, associés à des moyens formant catalyseur d'oxydation désignés par la référence générale 2, et intégrés dans une ligne d'échappement 3, d'un moteur Diesel 4 de véhicule automobile.

Le moteur peut être associé à un turbocompresseur et dans ce cas, la portion de turbine 5 de celui-ci est également associée à cette ligne d'échappement, la portion du compresseur 6 du turbocompresseur étant placée en amont du moteur.

Par ailleurs, ce moteur est également associé à des moyens 7 à rampe commune d'alimentation en carburant des cylindres de ce moteur, adaptés pour mettre en oeuvre, à iso-couple, une stratégie de régénération par injection de carburant dans les cylindres, selon au moins une post-injection, de façon classique.

Ces moyens sont contrôlés par une unité de pilotage, désignée par la référence générale 8, adaptée pour détecter une requête de régénération req.RG, délivrée par exemple par un superviseur des moyens de dépollution, et donc de post-injection et raccordée à des moyens 9 de détection d'une phase de ralenti du moteur de celui-ci.

Ces moyens peuvent présenter n'importe quelle structure appropriée.

Par ailleurs, cette unité de pilotage 8 est également raccordée à des moyens d'acquisition de la température en aval des moyens formant catalyseur 2, ces moyens d'acquisition étant désignés par la référence générale 11.

Ces moyens comprennent tout capteur de température approprié.

Ceci permet alors, suite à la détection d'une requête de régénération et donc de post-injection, à cette unité de pilotage 8, de détecter une phase de ralenti du moteur de celui-ci, comme cela est illustré par l'étape 12 sur la figure 2.

L'unité 8 est alors adaptée pour acquérir la température en aval des moyens formant catalyseur lors de l'étape 13 et pour déterminer, à partir de cette température, une durée maximale d'application des post-injections durant la phase de ralenti, lors de l'étape 14.

L'unité 8 surveille alors en 15 et 16, la durée d'utilisation des post-injections, et détecte le moment où cette durée d'utilisation a atteint la durée maximale d'application prédéterminée.

Dès que la durée d'utilisation a atteint la durée maximale d'application prédéterminée lors de la phase au ralenti du moteur, comme cela est illustré par l'étape 17, l'unité de pilotage est adaptée pour réduire progressivement la ou chaque post-injection, selon une rampe par exemple calibrable en 18.

On notera également qu'un tel système peut fonctionner avec des moyens de dépollution formés par un filtre à particules, un piège à NOx, et qu'un additif destiné à se déposer avec les particules auxquelles il est mélangé, sur les moyens de dépollution pour faciliter leur régénération peut également être mélangé au carburant, de façon classique, pour abaisser la température de combustion des suies piégées dans celui-ci.

De façon classique, cet additif est en effet présent dans les particules après combustion du carburant additivé dans le moteur.

Un additif formant piège à NOx peut également être envisagé.

On conçoit alors que grâce à une telle structure, on autorise une durée maximale d'application des post-injections pour la phase de ralenti.

Cette durée maximale se présente sous la forme d'un compteur de temps qui se vide, c'est-à-dire décroît/se décrémente au cours de la phase de ralenti durant la phase de régénération. Ce compteur est réinitialisé à la fin de cette phase.

En fait, ce système permet de limiter les quantités de carburant post-injectées lors de la phase de ralenti lorsque les niveaux thermiques de la ligne d'échappement sont les plus défavorables.

En limitant de cette façon la quantité totale de carburant post-injecté pendant cette phase, qui n'est pas la plus efficace du point de vue de la régénération des moyens de dépollution, on optimise la proportion de temps de post-injection efficace et on limite la dilution de l'huile de lubrification du moteur par le carburant.

Enfin, ceci permet également de limiter le risque que la fonction d'oxydation ne se désamorce subitement, ce qui se traduirait par un déficit de conversion des HC et donc une bouffée de HC à l'échappement pouvant générer des fumées et/ou des odeurs.

Bien entendu, d'autres modes de réalisation peuvent être envisagés.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

## Revendications

1. Système d'aide à la régénération de moyens de dépollution (1) associés à des moyens formant catalyseur d'oxydation (2), et intégrés dans une ligne d'échappement (3) d'un moteur Diesel, (4) de véhicule automobile et dans lequel le moteur (4) est associé à des moyens (7) à rampe commune d'alimentation en carburant de cylindres du moteur, adaptés pour mettre en oeuvre, à iso-couple, une stratégie de régénération par injection de carburant dans les cylindres selon au moins une post-injection, comprenant:
- des moyens (8) de détection d'une requête de régénération (req.RG) et donc de post-injection ;
- des moyens (9) de détection d'une phase de ralenti du moteur de celui-ci;
- des moyens (11) d'acquisition de la température en aval des moyens formant çatalyseur (2) ;
**caractérisé en ce qu'**il comporte:
- des moyens (8) de détermination d'une durée maximale d'application des post-injections durant la phase de ralenti, à partir de cette température ; et
- des moyens (7,8) de réduction progressive de la ou de chaque post-injection, dès que la durée d'utilisation des post-injections a atteint la durée maximale d'application prédéterminée.

2. Système selon la revendication 1, **caractérisé en ce que** les moyens de réduction (7,8) sont adaptés pour réduire la ou chaque post-injection selon une rampe calibrable.

3. Système selon la revendication 1 ou 2, **caractérisé en ce que** les moyens de dépollution (1) comprennent un filtre à particules.

4. Système selon la revendication 1, 2 ou 3, **caractérisé en ce que** les moyens de dépollution (1) comprennent un piège à NOx.

5. Système selon l'une quelconque des revendications précédentes, **caractérisé en ce que** le carburant comporte un additif destiné à se déposer avec les particules auxquelles il est mélangé, sur les moyens de dépollution (1) pour faciliter leur régénération.

6. Système selon l'une quelconque des revendications 1 à 4, **caractérisé en ce que** le carburant comporte un additif formant piège à NOx.

7. Système selon l'une quelconque des revendications précédentes, **caractérisé en ce que** le moteur est associé à un turbocompresseur (5,6).

## Claims

1. System for assisting the regeneration of pollution control means (1) associated with means constituting an oxidation catalyst (2) and incorporated in an exhaust system (3) of a diesel engine (4) of a motor vehicle and in which the engine (4) is associated with common manifold means (7) feeding fuel to the engine's cylinders designed to implement a strategy of regeneration through the injection of fuel into the cylinders through at least one post-injection at constant torque, comprising:
- means (8) for detecting a request for regeneration (req.RG) and therefore post-injection,
- means (9) for detecting a stage in which this engine is slow running,
- means (11) for acquiring the temperature downstream of the means constituting the catalyst (2),
**characterised in that** it comprises:
- means (8) for determining a maximum time for the application of post-injection during the slow-running stage on the basis of that temperature, and
- means (7, 8) for progressively reducing the single or multiple post-injections once the time during which post-injection is utilised has reached the maximum predetermined application time.

2. System according to claim 1, **characterised in that** the reduction means (7, 8) are designed to reduce the single or multiple post-injections according to a calibratable progression.

3. System according to claim 1 or 2, **characterised in that** the pollution-reducing means (1) comprise a particulates filter.

4. System according to claims 1, 2 or 3, **characterised in that** the pollution control means (1) comprise a NOx trap.

5. System according to any one of the preceding claims, **characterised in that** the fuel comprises an additive designed to be deposited on the pollution-reducing means (1) together with the particles with which it is mixed in order to facilitate the means' regeneration.

6. System according to any one of claims 1 to 4, **characterised in that** the fuel comprises an additive forming a NOx trap.

7. System according to any one of the preceding claims, **characterised in that** the engine is associated with a turbocompressor (5, 6).

## Patentansprüche

1. System zur Unterstützung der Regeneration von mit einen Oxidationskatalysator (2) bildenden assoziierten und in eine Abgasleitung (3) eines Dieselmotors (4) eines Kraftfahrzeugs integrierten Mitteln zur Abgasreinigung (1), in dem der Motor (4) mit Common-Rail-Mitteln (7) für eine Kraftstoffzufuhr zu den Zylindern des Motors assoziiert ist, die geeignet sind, bei gleich bleibendem Motordrehmoment eine Strategie für die Regeneration durch Kraftstoffeinspritzung in die Zylinder entsprechend wenigstens einer Nacheinspritzung durchzuführen, das folgendes umfasst:
- Mittel (8) für das Detektieren einer Regenerationsanforderung (req.RG) und somit der Nacheinspritzung;
- Mittel (9) für das Detektieren einer Leerlaufphase des Motors;
- Mittel (11) für das Erfassen der Temperatur, die den den Katalysator bildenden Mitteln (2) nachgeordnet sind, **dadurch gekennzeichnet, dass** sie folgendes enthalten:
- Mittel (8) für das Bestimmen einer maximalen Dauer der Anwendung der Nacheinspritzungen während der Leerlaufphase, ausgehend von dieser Temperatur; und
- Mittel (7, 8) für das kontinuierliche Verringern der oder jeder Nacheinspritzung, sobald die Benutzungsdauer der Nacheinspritzungen die vorbestimmte Höchstdauer der Anwendung erreicht hat.

2. System gemäß Anspruch 1, **dadurch gekennzeichnet, dass** die Mittel für das Verringern (7, 8) geeignet sind, die oder jede Nacheinspritzung gemäß einer kalibrierbaren Einspritzleitung zu verringern.

3. System gemäß Anspruch 1 oder 2, **dadurch gekennzeichnet, dass** die Mittel zur Abgasreinigung (1) einen Partikelfilter umfassen.

4. System gemäß Anspruch 1, 2 oder 3, **dadurch gekennzeichnet, dass** die Mittel zur Abgasreinigung (1) eine Noₓ-Falle umfassen.

5. System gemäß einem der vorhergehenden Ansprüche, **dadurch gekennzeichnet, dass** der Kraftstoff ein Additiv beinhaltet, das sich mit den Partikeln, mit denen es vermischt wird, auf den Mitteln zur Abgasreinigung (1) ablagern soll, um deren Regeneration zu ermöglichen.

6. System gemäß einem der Ansprüche 1 bis 4, **dadurch gekennzeichnet, dass** der Kraftstoff ein Additiv beinhaltet, das eine NOₓ-Falle bildet.

7. System gemäß einem der vorhergehenden Ansprüche, **dadurch gekennzeichnet dass** der Motor mit einem Turbolader (5, 6) assoziiert ist.
